# EUROPEAN PATENT APPLICATION

(11) **EP 2 945 105 A1**
(43) Date of publication of application: **18.11.2015**
(21) Application number: 14737505.9
(22) Date of filing: 09.01.2014
(51) Int. Cl.: G06Q 10/04

(54) **DEVICE FOR ESTIMATING THERMAL CHARACTERISTICS OF ROOM, PROGRAM**

(30) Priority: 11.01.2013 JP 2013003587
(71) Applicant: Panasonic Intellectual Property Management Co., Ltd., Osaka-shi, Osaka 540-6207 (JP)
(72) Inventor: MISE, Atsushi, Osaka-shi, Osaka 540-6207 (JP); MURO, Naoki, Osaka-shi, Osaka 540-6207 (JP); MARUYAMA, Keiichi, Osaka-shi, Osaka 540-6207 (JP)
(74) Representative: Appelt, Christian W.
(86) International application number: PCT/JP2014/000058
(87) International publication number: WO 2014/109291

(57) **Abstract**

A room-thermal-characteristics estimating device (10) includes a storage (13), an evaluator (15), a prediction formula producer (16), and a room temperature estimator (18). The evaluator (15) determines a time difference, based on pieces of the room temperature data and pieces of the outside air temperature data, during a given extraction term, which are stored in the storage (13), by relatively shifting one of corresponding measured dates and times of the pieces of the room temperature data and corresponding measured dates and times of the pieces of the outside air temperature data so that a correlation coefficient between the pieces of the room temperature data and the pieces of the outside air temperature data becomes maximum. The prediction formula producer (16) produces a prediction formula expressing a relation between the pieces of the room temperature data and the pieces of the outside air temperature data, the one of which the time difference is provided to. The room temperature estimator (18) estimates a room temperature at a target date and time by applying an outside air temperature at a date and time that is earlier by the time difference determined by the evaluator (15) than a target date and time and to thereby determine a room temperature.

## Description

### TECHNICAL FIELD

The invention relates to a room-thermal-characteristics estimating device configured to estimate thermal characteristics of a room, and a program that causes a computer to function as the room-thermal-characteristics estimating device.

### BACKGROUND ART

There has been known a technique of adjusting a room temperature to a desired temperature at a scheduled time, based on information about temporal change in the room temperature and a predicted outside air temperature (see, e.g., JPH06-42765A, hereinafter referred to as "Document 1"). Also, regarding a temperature in a vehicle, there has also been known a technique of estimating a change in temperature of an in-vehicle space based on an estimated change in amount of solar radiation, a measured outside air temperature and a measured in-vehicle space temperature, and issuing a warning when the in-vehicle space temperature is predicted to reach a predetermined threshold (see, e.g., JP2005-343386A, hereinafter referred to as "Document 2").

Document 1 discloses a technique of measuring the room temperature as environmental information, and estimating the temporal change in the room temperature based on a history of the measured room temperatures. Document 1 also discloses a technique of determining an operation start time and a heating start time of a heater, based on the estimated temporal change in the room temperature and the outside air temperature, required amount of heat for room heating (hereafter, called "heating road energy"), and heating capability of the heater. Specifically, in Document 1, estimated values of the room temperature and the outside air temperature are determined, and the heating road energy for adjusting the room temperature to a desired temperature is calculated based on the estimated values.

In the configuration described in Document 1, the room temperature is estimated in order to calculate the heating road energy. However, in Document 1, the room temperature is estimated based on the history data of the room temperature. Document 1 does not disclose a technique for estimating the room temperature using another factor which the room temperature depends on.

Document 2 discloses a technique of measuring the room temperature and the outside air temperature as environmental information, and estimating a in-vehicle space temperature based on the measured in-vehicle space temperature and the measured outside air temperature along with the estimated amount of sun light.

The configuration described in Document 2 is directed to estimate the in-vehicle space temperature. It should be note that the in-vehicle space temperature follows the outside air temperature in short time when the outside air temperature changes. Therefore, it is relatively easy to estimate the in-vehicle space temperature based on the outside air temperature and the amount of sun light. On the other hand, the temperature in a building room depends on the thermal characteristics, such as heat insulating property, of the room, and does not immediately change when the outside air temperature changes. It is therefore difficult to estimate a room temperature in a building from the outside air temperature, based on the technique described in Document 2.

It has also been known a technique of estimating a room temperature in a building by use of a computer simulation, based on various factors such as the outside air temperature, the heat insulating property of the building, the sun light, the air ventilation, the rain fall, presence or absence of a person and the like. However, such kinds of computer simulation require a lot of information, and may further require dedicated measurement in order to obtain an accurate value. Therefore, this technique is not convenient for estimating the room temperature.

### DISCLOSURE OF INVENTION

An object of the invention is to provide a room-thermal-characteristics estimating device for estimating a room temperature which reflects the room-thermal-characteristics based on measured environmental information, without complicated computer simulation, and to provide a program that causes a computer to function as the room-thermal characteristics estimating device.

A room-thermal-characteristics estimating device according to the invention includes: a room temperature obtainer configured to obtain room temperature data from a room temperature meter; an outside air temperature obtainer configured to obtain outside air temperature data from an outside air temperature meter; a storage configured to store the room temperature data obtained by the room temperature obtainer and the outside air temperature data obtained by the outside air temperature obtainer with each piece of the room temperature data and the outside air temperature data associated with a corresponding measured date and time; an evaluator configured to determine a time difference, based on pieces of the room temperature data and pieces of the outside air temperature data, during a given extraction term, which are stored in the storage, by relatively shifting one of corresponding measured dates and times of the pieces of the room temperature data and corresponding measured dates and times of the pieces of the outside air temperature data so that a correlation coefficient between the pieces of the room temperature data and the pieces of the outside air temperature data becomes maximum; a prediction formula producer configured to provide the time difference determined by the evaluator to dates and times corresponding to either the pieces of the room temperature data or the pieces of the outside air temperature data, during the extraction term, which are stored in the storage, and to produce a prediction formula expressing a relation between the pieces of the room temperature data and the pieces of the outside air temperature data, the one of which the time difference is provided to; a prediction change obtainer configured to obtain a predicted temporal change in outside air temperature; and a room temperature estimator configured to estimate a room temperature at a target date and time by determining, from the temporal change in outside air temperature obtained by the prediction change obtainer, an outside air temperature at a date and time that is earlier by the time difference than the target date and time, and applying the determined outside air temperature to the prediction formula produced by the prediction formula producer.

In the room-thermal-characteristics estimating device, preferably, the extraction term is included in any one of division periods which a period of one year is divided into. The prediction formula producer is configured to produce respective prediction formulae corresponding to the division periods. The room temperature estimator is configured to select, from the respective prediction formulae corresponding to the division periods, a prediction formula corresponding to a division period which the target date and time belongs to, and to estimate the room temperature based on the selected prediction formula.

In the room-thermal-characteristics estimating device, preferably, the extraction term is one or more days.

Preferably, the room-thermal-characteristics estimating device further includes a correction information obtainer configured to obtain correction information corresponding to one state that has been selected from two or more states. The correction information is besides the outside air temperature and affects the room temperature. The prediction formula producer is configured to correct the prediction formula according to the state of the correction information obtained by the correction information obtainer, and thereby to produce a corrected prediction formula. The room temperature estimator is configured to estimate the room temperature based on the corrected prediction formula.

In the room-thermal-characteristics estimating device, preferably, the room temperature obtainer is configured to obtain the room temperature data from a room temperature meter that measures a temperature of a room. The prediction formula producer is configured to update the prediction formula for each predetermined period. The room-thermal-characteristics estimating device further includes a determinator configured to judge a deterioration degree of heat insulating property of the room of which temperature is measured by the room temperature meter, employing a coefficient contained in the updated prediction formula as an evaluation value.

Another room-thermal-characteristics estimating device according to the invention includes: a room temperature obtainer configured to obtain room temperature data from a room temperature meter; an outside air temperature obtainer configured to obtain outside air temperature data from an outside air temperature meter; a storage configured to store the room temperature data obtained by the room temperature obtainer and the outside air temperature data obtained by the outside air temperature obtainer with each piece of the room temperature data and the outside air temperature data associated with a corresponding measured date and time; an evaluator configured to determine a time difference, based on pieces of the room temperature data and pieces of the outside air temperature data, during a given extraction term, which are stored in the storage, by relatively shifting one of corresponding measured dates and times of the pieces of the room temperature data and corresponding measured dates and times of the pieces of the outside air temperature data so that a correlation coefficient between the pieces of the room temperature data and the pieces of the outside air temperature data becomes maximum; a first prediction formula producer configured to provide the time difference determined by the evaluator to either dates and times corresponding to the pieces of the room temperature data or dates and times corresponding to the pieces of the outside air temperature data, during the extraction term, which are stored in the storage, and to produce a prediction formula expressing a relation between the pieces of the room temperature data and the pieces of the outside air temperature, the one of which the time difference is provided to; a second prediction formula producer configured, based on pieces of the room temperature data and pieces of the outside air temperature data corresponding to each time in each of two or more days during a given extraction period, which are stored in the storage, to produce regression prediction formulae, as prediction formulae, each of which express a relation between pieces of room temperature data and pieces of outside air temperature data for each time; a prediction change obtainer configured to obtain a predicted temporal change in outside air temperature; and a room temperature estimator configured to, during a time period that the room temperature is affected by sun light, estimate a room temperature of a target time by, determining, from the temporal change in outside air temperature obtained by the prediction change obtainer, an outside air temperature at a time that is earlier by the time difference than the target time, and applying the determined outside air temperature to the prediction formula produced by the first prediction formula producer, and to, during a time period that the room temperature is not affected by sun light, estimate a room temperature by applying an outside air temperature at a target time, which is obtained based on the temporal change in outside air temperature obtained by the prediction change obtainer, to a prediction formula corresponding to the target time produced by the second prediction formula producer.

Preferably, the room-thermal-characteristics estimating device further includes an information outputter configured to transmit the room temperature estimated by the room temperature estimator to an informing device.

In the room-thermal-characteristics estimating device, preferably, the outside air temperature obtainer is configured to obtain outside air temperature data provided through a telecommunication network.

A program according to the invention is configured to cause a computer to function as the room-thermal-characteristics estimating device according to any of above described room-thermal-characteristics estimating devices.

With the configuration of the invention, it is possible to estimate a room temperature which reflects the room-thermal-characteristics based on easily measurable information, without complicated computer simulation.

### BRIEF DESCRIPTION OF DRAWINGS

FIG. 1 is a block diagram illustrating Embodiment 1;
FIGS. 2A and 2B are graphs for illustrating a principal of Embodiment 1;
FIG. 3 is a graph for illustrating the principal of Embodiment 1;
FIG. 4 is a block diagram illustrating a modification of Embodiment 1;
FIG. 5 is a block diagram illustrating Embodiment 2; and
FIG. 6 is a graph illustrating an example of prediction formula used for Embodiment 2.

### DESCRIPTION OF EMBODIMENTS

It will be explained a technique of estimating a temperature of a room in which air-conditioning is not performed, using an estimated temporal change in the outside air temperature, and a technique of evaluating a heat insulating property of the room. The technique of evaluating the heat insulating property includes a technique of calculating an evaluation value for the heat insulating property. Under a condition where the air-conditioning is not performed, factors which the room temperature depends on include the outside air temperature, the heat insulating property of the room, the sun light (presence or absence of the sun light and the amount of sun light), the air ventilation (presence or absence of the air ventilation and the amount of sun light), the rain fall (whether it rains or not, and the amount of sun light), the number of people in the room, and the like.

A heat insulating property of a room is unique characteristics for a residence, and it may be possible to roughly estimate the heat insulating property of the room based on the building materials of the residence, the construction method of the residence, and the like. However, it is not easy to quantitatively determine the heat insulating property of the room. Also, although it is possible to count the number of people in the room, it is difficult to theoretically determine the relation between the room temperature and the number of people in the room because the degree of influence on the increase in the room temperature differs between persons depending on their metabolic rate, amount of clothing, and the like. Also, it is possible to monitor the sun light, the air ventilation and the rain fall, but it is not easy to theoretically determine the influence thereof on the room temperature.

That is, it is possible to measure the factors which the room temperature depends on, but it is not easy to create a well-suited model that connects these factors with the room temperature. Therefore, it is not easy to obtain a room temperature from the measured values of these factors by a computer simulation. Also, a computer simulation which can estimate a room temperature with a practically needed accuracy requires so much information to be input and a correction processing. Therefore, estimating a room temperature for each room requires the professional's large work.

It is explained bellow a room-thermal-characteristics estimating device which can estimate a room temperature with a decent accuracy based on easily measurable information, without a complicated model-based computer simulation.

### (Embodiment 1)

In the present embodiment, first explained is a technique of estimating a room temperature based only on an outside air temperature, and then explained is a technique of estimating a room temperature taking into account of influence of the sun light, the air ventilation, the rain fall and the number of people in the room. A relation between the room temperature and the outside air temperature is considered to depend on the thermal-characteristics (such as heat insulating property and heat storage performance) of the room.

Under assumption that the room temperature depends only on the outside air temperature, it may be possible to make a model in which the heat is transferred through partitions of the room such as walls, a ceiling and a floor, and the room temperature changes according to the change in the outside air temperature. In this model, the influence of the outside air temperature on the room temperature would vary according to the extent of the thermal conductivity of the partitions and the extent of the heat capacitance of the partitions. In the embodiment, the temperature of the air inside the room is regarded as the room temperature, and the radiant heat from the partitions is omitted.

According to the model described above, the room temperature would change later than the change in the outside air temperature. The inventors have reviewed results of experiments and found that there exist a particular relation between the change in the outside air temperature and the change in the room temperature, and that the room temperature changes later by a delay time than the change in the outside air temperature, and that the delay time depends on the thermal-characteristics (such as the heat insulating property and the heat storage performance) of the partitions. Furthermore, they have found, by determining the delay time, that a relation between a room temperature at a target time and an outside air temperature at a time shifted by the delay time from the target time can be expressed by a simple prediction formula, and that a room temperature at a desired dime can be estimated from an outside air temperature based on this prediction formula.

Described below is a thermal-characteristics estimating device 10 for estimating a room temperature from an outside air temperature. As described above, the prediction formula is needed to be produced for estimating the room temperature, and the prediction formula differs depending on the thermal characteristics of the room. Therefore, the thermal-characteristics estimating device **10** of the present embodiment includes a structure configured to produce the prediction formula and a structure configured to estimate a room temperature from an outside air temperature based on the prediction formula.

The thermal-characteristics estimating device **10** includes a device including a processor configured to execute programs to achieve below described functions, and a device for an interface, as main hardware components. The device including the processor may be a microcomputer with a built-in memory, a processor with an attached external memory, or the like. Also, a computer that executes programs for achieve the below described functions may function as the thermal-characteristics estimating device **10.** Such kind of programs may be provided through a computer-readable storage medium, or be provided by communication via a telecommunication network.

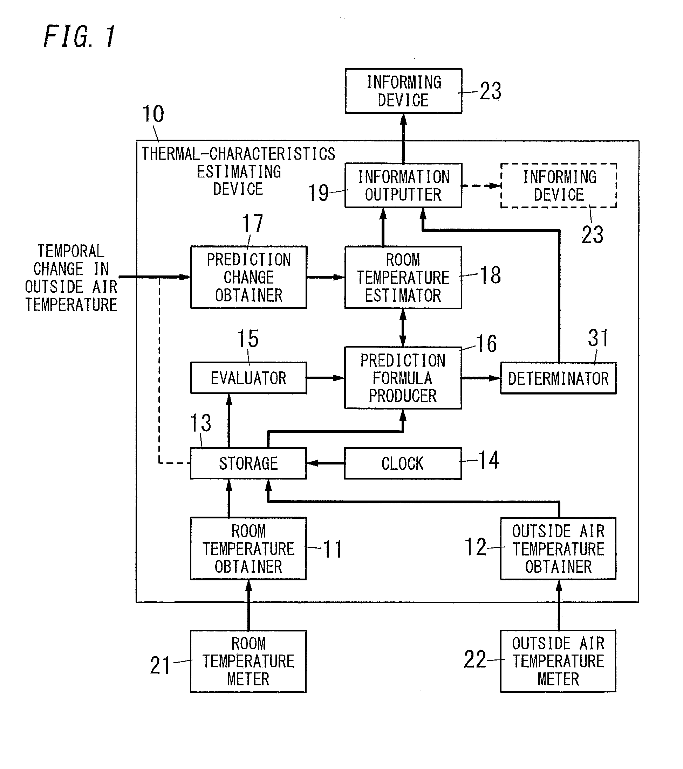

First explained is the structure configured to produce the prediction formula in the thermal-characteristics estimating device **10.** In order to produce the prediction formula, the room temperature and the outside air temperature are needed to be measured while being associated with respective dates and times. Therefore, as shown in FIG. 1, the thermal-characteristics estimating device **10** includes a room temperature obtainer **11** configured to obtain room temperature data (measured values) from a room temperature meter **21,** and an outside air temperature obtainer **12** configured to obtain outside air temperature data (measured values) from an outside air temperature meter **22.** The thermal-characteristics estimating device 10 further includes a storage **13,** a clock **14,** an evaluator **15** and a prediction formula producer **16.** The storage **13** is configured to store the room temperature data (measured values) and the outside air temperature data (measured values) with each piece of the room temperature data and the outside air temperature data associated with a corresponding measured date and time. The clock **14** is configured to measure the current date and time. The evaluator **15** is configured to calculate a correlation coefficient between: pieces of time series data of room temperature; and pieces of time series data of outside air temperature corresponding to dates and times which are shifted by a delay time from dates and times corresponding to the pieces of time series data of room temperature. The evaluator **15** is configured to determine a delay time (an optimum time difference) corresponding to the maximum correlation coefficient. The prediction formula producer **16** is configured to produce the prediction formula expressing a relation between the room temperature and the outside air temperature, based on the optimum time difference determined by the evaluator **15.**

The room temperature meter **21** is installed in a room of a building, and is configured to measure a temperature where the room temperature meter **21** is installed (i.e., measure a room temperature). The outside air temperature meter **22** is installed outside the building, and is configured to measure a temperature where the outside air temperature meter **22** is installed (i.e., measure an outside air temperature).

Each of the room temperature meter **21** and the outside air temperature meter **22** includes a temperature sensor configured to generate an analog output that reflects an ambient temperature, such as a thermistor, and a sensor amplifier configured to amplify the output of the temperature sensor. Each of the room temperature meter **21** and the outside air temperature meter **22** further includes a converter configured to convert the output of the sensor amplifier into digital data, and a communicator configured to transmit the digital data of the converter to the thermal-characteristics estimating device **10.**

Each of the room temperature meter **21** and the outside air temperature meter **22** may not include the communicator or may not include the converter and the communicator. However, in view of transmitting measured values precisely to the thermal-characteristics estimating device **10,** each of them desirably includes the converter and the communicator. In the case where the converter is not provided, the room temperature meter **21** and/or the outside air temperature meter **22** provide analog data to the thermal-characteristics estimating device **10.**

Communication between the room temperature meter **21** or the outside air temperature meter 22 and the thermal-characteristics estimating device **10** is performed desirably through a wireless communication channel with a radio wave used as transmission medium, or through a wired communication channel. The room temperature meter **21** may share a casing with the thermal-characteristics estimating device **10.** In the structure where the room temperature meter **21** shares the casing with the thermal-characteristics estimating device **10,** the room temperature meter **21** is not necessarily to include the communicator.

The room temperature data (measured values) obtained by the room temperature obtainer **11** and the outside air temperature data (measured values) obtained by the outside air temperature obtainer **12** are stored in the storage **13** with each piece of the room temperature data and the outside air temperature data associated with a corresponding measured date and time. That is, the storage **13** is configured to store two kinds of sets of two information pieces, i.e., (room temperature, date and time) and (outside air temperature, date and time); or store sets of three information pieces, i.e., (room temperature, outside air temperature, date and time). The latter case is smaller in the data amount, and can save the capacity of the storage **13.** Preferably, each of the room temperature obtainer **11** and the outside air temperature obtainer **12** is configured to obtain data at regular time intervals.

The date and time to be stored in the storage **13** is measured by the clock **14** provided in the thermal-characteristics estimating device **10.** Dates and times at which the room temperature data and the outside air temperature data are to be obtained are preset in the room temperature obtainer **11** and the outside air temperature obtainer **12,** respectively. The room temperature obtainer **11** and the outside air temperature obtainer **12** are configured to obtain room temperature data and outside air temperature data at each of the preset dates and times, respectively, based on the current date and time measured by the clock **14.** In this configuration, it is desirable that the storage **13** is configured to store the sets of three information pieces, (room temperature, outside air temperature, date and time).

For example, each of the room temperature obtainer **11** and the outside air temperature obtainer **12** is configured to obtain data for each hour. For example, each of the room temperature obtainer **11** and the outside air temperature obtainer **12** is configured to obtain data at each hour. The room temperature obtainer **11** and the outside air temperature obtainer **12** is not necessarily to be configured to obtain data for each hour, but may obtain data for each 10 minutes, each **15** minutes, each 30 minutes, each two hours, or the like, one of which may be selected as needed. The shorter the time intervals are, the larger amount of information is obtained, which would increase the estimation accuracy of the prediction formula. However, this causes increase in the data amount to be stored in the storage **13.** It is therefore preferable that the time intervals for obtaining data be set to a period around one hour, and be set in a range from a fraction of one hour to several hours.

Each of the room temperature meter **21** and the outside air temperature meter **22** may include a dedicated clock configured to measure the current date and time. In this configuration, the room temperature meter **21** and the outside air temperature meter **22** are configured to obtain the room temperature data and the outside air temperature data based on the dates and times measured by their own clocks, respectively, and transmit the obtained data to the thermal-characteristics estimating device **10.** In other words, the room temperature meter **21** and the outside air temperature meter **22** are configured to transmit their respective room temperature data and outside air temperature data to the thermal-characteristics estimating device **10** with pieces of the room temperature data and the outside air temperature data associated with the corresponding date and time measured by their own clocks, respectively.

In this configuration, it is desirable that the storage **13** is configured to store the two kinds of sets of two information pieces, i.e., (room temperature, date and time) and (outside air temperature, date and time). Note that each of the room temperature meter **21** and the outside air temperature meter **22** is not limited to be configured to transmit the room temperature data or the outside air temperature data at that time the room temperature or the outside air temperature is measured, but may be configured to transmit a collection of data over a half day, or one day.

It is desirable that, in a case where there is a difference between a date and time at which a piece of the room temperature data is obtained and a date and time at which a piece of the outside air temperature data is obtained, if the difference is a half or less of an interval for obtaining pieces of data (e.g., one-tenth or less of an interval for obtaining pieces of data), these pieces of the respective data be regarded to be obtained at a same date and time and are associated with the same date and time.

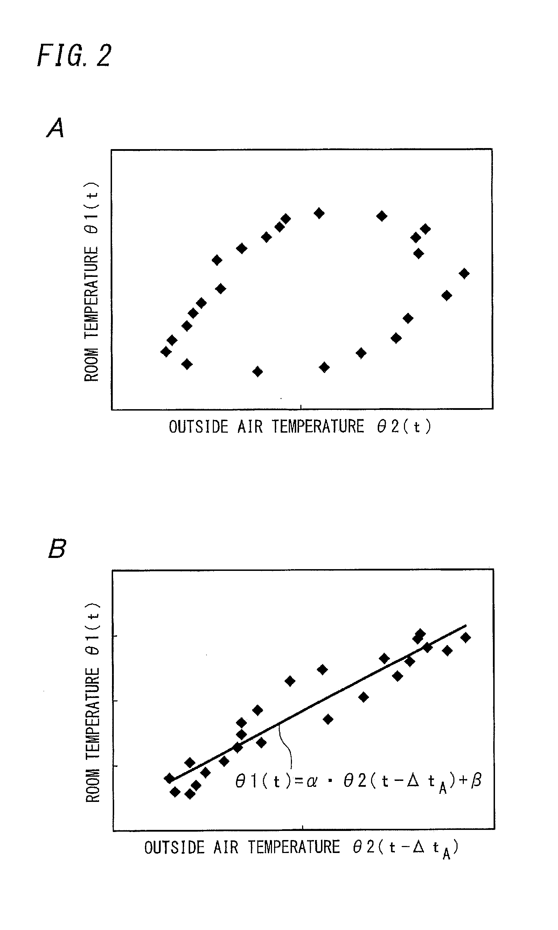

FIG. 2A shows an example of points each of which is a relation between a room temperature and an outside air temperature measured at a same date and time. Regarding each data point in FIG. 2A, the transverse axial component and the vertical axial component of the data point respectively denote a value of the outside air temperature and a value of the room temperature, which are measured at a same date and time. In FIG. 2A, a plurality of points are plotted that correspond to different times of day. There seems no relationship between the room temperature and the outside air temperature with a glance of the graph. In contrast, as described above, the present embodiment is achieved based on the presumption that there is a correlation between the temporal change in room temperature and the temporal change in outside air temperature, if provided is a delay time which depends on the thermal-characteristics of the room.

Therefore, the thermal-characteristics estimating device **10** includes the evaluator **15** configured to determine a time difference, based on pieces of room temperature data (measured values), pieces of outside air temperature data (measured values), and the associated dates and times, which are stored in the storage **13,** so that a correlation coefficient between the room temperature and the outside air temperature becomes maximum. The evaluator **15** is configured to determine the time difference (hereinafter, also called "optimum time difference"), based on pieces of the room temperature data and pieces of the outside air temperature, during a focused term (hereinafter, called "extraction term"), by relatively shifting one of corresponding measured dates and times of the pieces of the room temperature data and corresponding measured dates and times of the pieces of the outside air temperature data so that a correlation coefficient between the pieces of the room temperature data and the pieces of the outside air temperature data becomes maximum. The extraction term is not limited to one day, but may be two or more days. In the example described below, the measured dates and times corresponding to the outside air temperature are shifted with respect to the measured dates and times corresponding to the room temperature. However, the contrary case is possible in which the measured dates and times corresponding to the room temperature are shifted with respect to the measured dates and times corresponding to the outside air temperature.

In this example, a piece of the room temperature data and a piece of the outside air temperature data corresponding to a certain date and time "t" are represented by "θ1(t)" and "θ2(t)", respectively. A data obtaining interval of pieces of room temperature data "θ1(t)", and pieces of outside air temperature data "θ2(t)", is represented by "p". A certain date and time "t" is represented by a formula "t=t0+n*p", and a certain time difference "Δt" is represented by a formula "Δt=m*p", where "t0" is a base point determined according to the "extraction term", and "m" and "n" are each a natural number.

According to the above notation, pieces of room temperature data are represented by "θ1(t0+p)", "θ1(t0+2p)", "θ1(t0+3p)", ..., and pieces of outside air temperature data are represented by "θ2(t0+p)", "θ2(t0+2p)", "θ2(t0+3p)", ... A piece of outside air temperature data corresponding to a date and time earlier by a time difference "Δt" than a date and time corresponding to a piece of room temperature data represented by "θ1(t0+n*p)" is represented by a formula "θ2(t0+n*p-Δt)= θ2(t0+(n-m)p)".

In the following, it is considered a period of a certain extraction term which is defined as "[t0+p, t0+q*p]". In this case, an average value "a(θ1)" of the pieces of the room temperature data θ1(t), during a period of the extraction term, is calculated as an average of pieces of the room temperature data, {θ1(t0+p), θ1(t0+2p), ..., θ1(t0+q*p)}. An average value "a(θ2)" of the pieces of the outside air temperature data θ2(t), during a period which is earlier by "the time difference Δt" than "the extraction term", is calculated as an average of pieces of the outside air temperature data, {θ2(t0+(1-m)p), θ2(t0+(2-m)p), ..., θ2(t0+(q-m)p)}. Where, [t0+p, t0+q*p] represents a certain closed interval, and includes discrete values of {t0+p, t0+2p, t0+3p, ..., t0+q*p}, the number of which is "q".

The evaluator **15** is configured, based on these values, to calculate a correlation coefficient between the pieces of the room temperature data θ1(t) corresponding to certain dates and times "t" and pieces of the outside air temperature data θ2(t-Δt) corresponding to dates and times "t-Δt", earlier by the time difference Δt(=m*p) than the certain dates and times. The correlation coefficient can be calculated by a known calculation method, and obtained by dividing a covariance of the pieces of data θ1(t) and the pieces of data θ2(t-Δt) by a product of a standard deviation of the pieces of the data θ1(t) and a standard deviation of the pieces of the data θ2(t-Δt). The abovementioned average values "a(θ1)" and "a(θ2)" are used for calculating the covariance and the standard deviations. The variable "t", representing the dates and times of the pieces of the room temperature data θ1(t) and the pieces of the outside air temperature data θ2(t-Δt), ranges within the period of the extraction term (i.e., the closed interval [t0+p, t0+q*p]).

The evaluator **15** is configured to calculate a correlation coefficient for each value of the number "m", while changing the value of the number "m" to change the time difference Δt. In the present embodiment, the maximum value of the number "m" is limited so that a product "m*p" of the number "m" and the time interval "p" does not exceed a length of one day. For example, in a case where the time interval "p" corresponds to one hour, the maximum value of the number "m" is limited so as not to exceed "24". The evaluator 15 is configured to determine a value "mm" of the number "m", corresponding to the maximum correlation coefficient. The evaluator 15 determines the optimum time difference "Δt_{A}" by a formula "Δt_{A}=mm*p".

In short, regarding each data point in FIG. 2A, the transverse axial component and the vertical axial component of the data point denote a value of the outside air temperature and a value of the room temperature, respectively which are measured at a same date and time. Each data point corresponds to an element of data containing a room temperature, an outside air temperature and an obtaining date and time (a measured date and time), where the elements of data are stored in the storage **13.** FIG. 2A shows a plurality of (in detail, 24) data points which correspond to a plurality of elements of data, during a given extraction term.

Specifically, the evaluator **15** of the present embodiment is configured to determine the optimum time difference "Δt_{A}" according to the following process.

First, the evaluator **15** retrieves, from a collection of pieces of the room temperature data stored in the storage **13,** serial pieces of the room temperature data corresponding to a focused term (extraction term). The evaluator **15** also retrieves, from a collection of pieces of the outside air temperature data stored in the storage **13,** serial pieces of the outside air temperature data (first pieces of the outside air temperature data) corresponding to the dates and times of the retrieved pieces of the room temperature data. The evaluator **15** then calculates a correlation coefficient (first correlation coefficient) between the retrieved pieces of the room temperature data and the first pieces of the outside air temperature data.

Subsequently, the evaluator **15** retrieves, from the storage **13,** serial pieces of the outside air temperature data (second pieces of the outside air temperature data) corresponding to dates and times earlier by a time interval "p" ("p" is an interval for obtaining pieces of the room temperature data, or for obtaining pieces of the outside air temperature data) than dates and times corresponding to the retrieved pieces of the room temperature date, where the number of second pieces of the outside air temperature is the same as that of the pieces of the room temperature data. Then the evaluator **15** calculates a correlation coefficient (second correlation coefficient) between the retrieved pieces of the room temperature data and the second pieces of the outside air temperature data.

In this way, the evaluator **15** calculates a correlation coefficient between: the pieces of the room temperature data; and pieces of outside air temperature data corresponding to dates and times which are earlier by a time difference "Δt=m*p" than the dates and times corresponding to the pieces of the room temperature data, for each value of the number "m", while sequentially changing the value of the number "m".

The evaluator **15** determines the value "mm" of the number "m", corresponding to the maximum correlation coefficient, and calculates the optimum time difference by the formula "Δt_{A}=mm*p".

In other words, the evaluator **15** calculates two or more correlation coefficients, based on: a serial pieces of room temperature data corresponding to predetermined dates and times (e.g., during a period of one day); and two or more sets of pieces of outside air temperature data. Dates and times of pieces of outside air temperature data of each set corresponds to dates and times shifted by a certain delay time from the dates and times of the pieces of the room temperature data, which are stored in the storage **13.** The evaluator **15** extracts the maximum correlation coefficient from the two or more calculated correlation coefficients, and determines a delay time corresponding to the maximum correlation coefficient as the optimum time difference Δt_{A}.

FIG. 2B shows points each of which is a relation between a piece of the room temperature data θ1(t) and a piece of the outside air temperature data θ2(t-Δt_{A}) provided with the time difference (optimum time difference) Δt_{A} determined by the evaluator **15.** Regarding each data point in FIG. 2B, the vertical axial component and the transvers axial component of the data point denote a value of the room temperature measured at a certain time point and a value of the outside air temperature measured at a time point earlier by the time difference Δt_{A} than the certain time point, respectively. In the illustrated example, it is possible to find that there is a linear relationship between the pieces of the room temperature data θ1(t) and the pieces of the outside air temperature data θ2(t-Δt_{A}), and that the relation between them can be expressed by a linear function.

The prediction formula producer **16** of the thermal-characteristics estimating device **10** is configured to produce, based on the relationship shown in FIG. 2B, a prediction formula for estimating a room temperature from an outside air temperature. The prediction formula producer **16** of the present embodiment is configured to extract, from the room temperature data and the outside air temperature data stored in the storage **13,** pieces of the respective data during the focused extraction term, and to provide the time difference (the optimum time difference) Δt_{A} determined by the evaluator **15** to the dates and times corresponding to the extracted pieces of the outside air temperature data. Also, the prediction formula producer **16** is configured, on the presumption that the pieces of the room temperature data θ1(t) and the pieces of the outside air temperature data θ2(t-Δt_{A}) have a linear relationship, to write the prediction formula by a formula of "θ1(t)=α*θ2(t-Δt_{A})+β", and to determine the coefficients "α", "β" of the formula by a known calculation method such as least-square method. In other words, the prediction formula producer **16** is configured to produce the prediction formula by a simple linear regression analysis, based on the pieces of the room temperature data during the extraction term and the pieces of the outside air temperature data during a term earlier by the time difference Δt_{A} than the extraction term. The prediction formula producer **16** produces the prediction formula by a simple linear regression analysis involving the outside air temperature data provided with the time difference Δt_{A} as the independent variable and the room temperature data as the dependent variable. In this way, the evaluator **15** determines the time difference Δt_{A} and the prediction formula producer **16** determines the coefficients "α", "β", and as a result the prediction formula can be produced.

The prediction formula producer 16 may be configured to produce the prediction formula by way of providing the time difference (the optimum time difference) Δt_{A} determined by the evaluator **15** to the dates and times corresponding to the extracted pieces of the room temperature data. In this configuration, the prediction formula producer **16** writes, on the presumption that pieces of the room temperature data θ1(t+Δt_{A}) and pieces of the outside air temperature data θ2(t) have a linear relationship, the prediction formula by a formula of "θ1(t+Δt_{A})=α*θ2(t)+β", and determines the coefficients "α", "β" of the formula by a known calculation method such as least-square method. Therefore, in this configuration, the prediction formula producer **16** produces the prediction formula by a simple linear regression analysis, based on pieces of the outside air temperature data during the extraction term and pieces of the room temperature data during a term later by the time difference Δt_{A} than the extraction term.

The thermal-characteristics estimating device **10** produces the prediction formula by the structure described above, and then estimates a room temperature from an outside air temperature based on the prediction formula. The structure configured to estimate a room temperature from an outside air temperature in the thermal-characteristics estimating device **10** is described below. In order to estimate a room temperature from an outside air temperature, the thermal-characteristics estimating device **10** needs to obtain a piece of the outside air temperature data at a date and time which is earlier by the time difference (delay time) Δt_{A} determined by the evaluator **15** than a target date and time. Note that the "target date and time" is a date and time at which a room temperature is to be estimated.

Therefore, the thermal-characteristics estimating device **10** includes a prediction change obtainer **17** and a room temperature estimator **18.** The prediction change obtainer **17** is configured to obtain a predicted temporal change in outside air temperature, based on time series pieces of the outside air temperature data (measured values) obtained by the outside air temperature obtainer **12** from the outside air temperature meter **22.** The room temperature estimator **18** is configured to estimate a room temperature using the temporal change in outside air temperature.

The prediction change obtainer **17** is configured to apply the time series pieces of the outside air temperature data to any of pre-registered two or more kinds of templates of temporal changes in outside air temperature, and to predict the temporal change in outside air temperature based on the applied template. The prediction change obtainer **17** is configured, when applying the time series pieces of the outside air temperature data to any of templates of temporal change in outside air temperature, to limit the templates to be applied, taking into account the weather and/or season of the day.

Regarding the predicted change in out side air temperature, instead of employing the outside air temperature data (measured values) obtained by the outside air temperature obtainer **12** from the outside air temperature meter **22,** it is possible to employ a temporal change in outside air temperature obtained by the outside air temperature obtainer **12** via a telecommunication network such as internet. That is, the outside air temperature obtainer **12** may have a function configured to obtain outside air temperature data via a telecommunication network from a service provider that provides local weather information. In this configuration, the prediction change obtainer **17** employs the outside air temperature data obtained by the outside air temperature obtainer **12** from the service provider.

The outside air temperature data provided through the telecommunication network is the data related to a specific location in an area where a target room of which room temperature is to be estimated exists, and is not the outside air temperature corresponding to the target room. However, such the provided data can be expected to have linear relation with the outside air temperature of this room. Therefore, the room temperature estimator **18** is configured to correct, based on an actual measured value of the room temperature, a room temperature estimated using the provided outside air temperature. As a result, it is possible estimate a room temperature properly based on the outside air temperature data provided via the telecommunication network.

The room temperature estimator **18** determines, based on the predicted temporal change in outside air temperature obtained by the prediction change obtainer **17** and the time difference (optimum time difference) Δt_{A} determined by the evaluator **15,** an outside air temperature (a measured value or a prediction value) at a date and time earlier by the time difference (optimum time difference) Δt_{A} than the target date and time. Determined the outside air temperature, the room temperature estimator **18** estimates a room temperature by applying the determined outside air temperature to the prediction formula produced by the prediction formula producer **16.** In short, the room temperature estimator **18** is configured to determine, based on the predicted temporal change in outside air temperature, an outside air temperature at a time point earlier by the time difference Δt_{A} determined by the evaluator **15** than a date and time of which room temperature is to be estimated; and to apply the determined outside air temperature to the prediction formula, and thereby to estimate a room temperature at a target date and time.

It would be easily supposed that the time difference corresponding to the maximum correlation coefficient between pieces of the room temperature data and pieces of the outside air temperature data and/or a formula expressing the relation between pieces of outside air temperature data and pieces of the room temperature data varies according to the season. It is therefore desirable that an extraction term, for measuring the room temperature and the outside air temperature used for producing the prediction formula, is determined for each season. In this configuration therefore, it is defined division periods which a period of one year is divided into, and an extraction term is given for each division period. A length of the division period corresponds to a period which is appropriately selected from a range of a quarter of one year to one-twenty fourth of one year (in the case of the "quarter of one year", the division periods reflect four seasons of spring, summer, autumn, and winter; and in the case of the "one-twenty fourth of one year", each division period corresponds to a half month). The division periods and their extraction terms are preliminarily stored in the storage **13,** for example.

In this configuration, the prediction formula producer **16** produces prediction formulae of which the number corresponds to the number of division periods. For example, in a case where the length of the division period is one month, the prediction formula producer **16** produces **12** prediction formulae. The room temperature estimator **18** selects, from the respective prediction formulae corresponding to the division periods, a prediction formula corresponding to a division period which a target date and time belongs to, and estimates a room temperature based on the selected prediction formula using a temporal change in outside air temperature.

It should be noted that the room-thermal-characteristics possibly varies across the ages. Therefore, desirably, the room temperature estimator **18** is configured, when estimating a room temperature, to employ a time difference which is determined for each division period. Specifically, it is desirable that the evaluator **15** newly determines a time difference (optimum time difference) Δt_{A} for each elapse of a division period, that the prediction formula producer **16** newly produces a prediction formula corresponding to the newly determined time difference Δt_{A}, and that the room temperature estimator **18** estimates a room temperature based on the newly produced prediction formula. However, the room temperature estimator **18** may be configured to estimate a room temperature based on a time difference determined regarding any of the division periods. It is also possible to estimate a room temperature based on an average of time differences determined regarding two or more division periods.

The thermal-characteristics estimating device **10** desirably includes an information outputter **19** configured to transmit the room temperature estimated by the room temperature estimator **18** to an informing device **23.** The informing device 23 may be a dedicated device including a display, or a device including a display and communication function, such as a smart phone, a tablet, and a personal computer. In a case of adopting such devices as the informing device **23,** the information outputter **19** is configured to communicate with these devices. The informing device **23** may be provided integrally in a housing of the thermal-characteristics estimating device **10,** as an informing device **23** in FIG. 1 shown by a broken line.

The room temperature estimated by the room temperature estimator **18** may, not only be notified of a user via the informing device **23,** but be used for controlling a device that possibly affects the room temperature, such as a ventilating fan, an air conditioner, an electric blind, an electric curtain and an electric window. In a case of controlling the heating and/or cooling operation of an air-conditioning apparatus(es) (air conditioner), by using a room temperature estimated based on the temporal change in outside air temperature, it is possible to determine a suitable timing at which the air-conditioning apparatus(es) should be turned off. As a result, it is possible to save energy consumed for air conditioning.

For example, in the summer, in a case where it is predicted that the room temperature can be kept in a comfortable level without operating a cooling apparatus due to decrease in the room temperature in the night and if it is determined a timing at which the cooling apparatus is to be turned off, it is possible to prevent the useless operation of the cooling apparatus to save energy. Similarly, in the winter, in a case where it is predicted that the room temperature can be kept in a comfortable level without operating a heating apparatus due to increase in the room temperature in the day time and if it is determined a timing at which the heating apparatus is to be turned off, it is possible to prevent the useless operation of the heating apparatus to save energy.

Incidentally, the time difference (optimum time difference) Δt_{A} determined by the evaluator 15 indicates a length of time required for reflecting the change in the outside air temperature on the room temperature, and therefore reflects the thermal-characteristics (heat insulating property) of the room. The coefficient "α" in the prediction formula produced by prediction formula producer 16 represents the degree of influence of the outside air temperature on the room temperature. Therefore, the coefficient "α" also reflects the thermal-characteristics (heat insulating property) of the room.

Therefore, by obtaining the aging variation of the time difference Δt_{A} determined by the evaluator **15** or the aging variation of the coefficient "α" determined by the prediction formula producer **16,** it is possible to evaluate the aging variation of the thermal-characteristics of the room. In view of this, in the thermal-characteristics estimating device **10** of the present embodiment, the prediction formula producer **16** has a function configured to update the prediction formula for each predetermined period. Also, the thermal-characteristics estimating device **10** of the present embodiment includes a determinator **31** configured to judge the deterioration degree of heat insulating property of the room of which temperature is measured by the room temperature meter **21.**

As described above, the prediction formula would vary according to the seasons. It is therefore preferable that the prediction formula is updated at given times of years, when the prediction formula is expected to be the same if other conditions are the same. Therefore, unit period of updating the prediction formula is, preferably, one year. Specifically, the prediction formula is updated every year, every two year, every three year, every five year, or the like. In the case of updating the prediction formula for the purpose of evaluating the aging variation of the thermal-characteristics of the room, all need is to update the prediction formula corresponding to at least one division period. For example, the prediction formula producer **16** may be configured to update the prediction formula corresponding to a division period of "summer" every year.

The determinator **31** of the embodiment is configured to employ the coefficient "α" included in the prediction formula, as an evaluation value for evaluating the thermal-characteristics of the room.

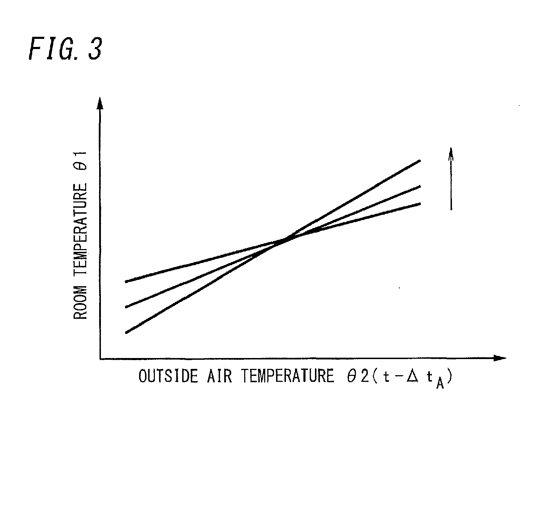

In the summer, if the room has a high heat insulating property, the room temperature would be lower than the outside air temperature. Specifically, the higher the heat insulating property of the room is, the smaller is the value of the coefficient "α". Therefore, the gradient (i.e., coefficient "α") of the prediction formula gradually increases over time, as shown in FIG. 3 (the arrow in the figure indicates the elapse of time).

The determinator **31** is configured to determine that the heat insulating property of the room has deteriorated when it finds that the current coefficient "α" of the prediction formula is larger than the previous one. The determinator **31** is also configured to compare the current coefficient "α" with a threshold and thereby to determine a timing at which the room should be reformed in view of heat insulating property. The increase in the coefficient "α" of the prediction formula indicates the deterioration of the heat insulating property of the room. Therefore, the determinator **31** is configured to determine that the room should be reformed when the current coefficient "α" exceeds the threshold. The Evaluation result by the determinator **31** is transmitted via the information outputter **19** to be presented on the informing device **23.**

On the other hand, in the winter, if the room has a high heat insulating property, the outside air temperature would be lower than the room temperature, because the thermal energy given for increasing the room temperature is not likely to be released outside. Therefore, regarding the winter, the coefficient "α" of the prediction formula gradually decreases as the deterioration of the heat insulating property of the room. In a case where the prediction formula is updated at winters, the determinator **31** determines, contrary to the case of the summer updating method, that the heat insulating property of the room has deteriorated when it finds that the current coefficient "α" is smaller than that in the previous one, and that the room should be reformed when the current coefficient "α" is lower than a threshold.

The deterioration of the heat insulating property of the room would cause the increase in energy consumption in the air-conditioning apparatus(es). It is therefore more preferable that the timing at which the room should be reformed is determined based not only on the coefficient "α" of the prediction formula but on the energy consumption in the air-conditioning apparatus(es). For example, electric power consumption may be monitored, in a case where the air-conditioning apparatus includes an air conditioner, a fan heater, an electric heater, an oil heater, and/or a floor heating system, which consume electric energy. Also, gas consumption may be monitored, in a case where the air-conditioning apparatus includes an air conditioner, a fan heater, a gas heater, and/or a floor heating system, which burns gas.

A thermal-characteristics estimating device **10** of a modification in the present embodiment is described below.

In the above-described embodiment, the thermal-characteristics estimating device 10 is configured to estimate a room temperature based only on an outside air temperature. However, as described above, when the air-conditioning is not performed, factors which the room temperature depends on include the sun light, the air ventilation, the rain fall, the number of people in the room. In view of this, the thermal-characteristics estimating device **10** of this modification is configured to obtain, as correction information, information on factors (sun light, air ventilation, rain fall, the number of people) which and besides the outside air temperature and possibly affects the room temperature, and to correct the prediction formula according to the correction information. If the air conditioning is performed by an air-conditioning apparatus(es) that has a function of controlling the room temperature, the temperature in the room relies on the operation state of the air-conditioning apparatus(es), and accordingly it is not possible to predict the room temperature by the prediction formula. In the explanation below, therefore, it is assumed that the air-conditioning is not performed.

For taking into consideration of the information on the sun light, the air ventilation, the rain fall and the number of present people, besides the outside air temperature, it would be considered to create a model for relating the respective information with the room temperature, and to apply numerical values regarding the respective information to this model. However, because causal relationship between them is complicated, such a model requires a complicated computer simulation. As a result, such a model requires a lot of parameters to be input and causes severe processing load.

Therefore, in order to prevent the increase in the number of parameters and the processing load, this modification treats each of the respective information as correction information, limits the number of possible states of each kind of correction information, and determines a prediction formula for each state of the correction information. In a case where there are two or more kinds of correction information, the prediction formula producer **16** divides, for each kind of correction information, the state of the correction information into two or more levels. Then the prediction formula producer **16** produces prediction formulae (corrected prediction formulae) each of which corresponds to a specific combination of levels of the two or more kinds of correction information.

For example, two levels (present and absent) are defined for each of the sun light, the air ventilation, and the rain fall. Contrary, regarding the number of present people, it is assumed that the room temperature is increased by a predetermined temperature value (for example, 0.5°C) per one person. By simplifying the kind of correction information and by limiting the number of possible states for each kind of correction information, the number of combination of the respective correction information is finite and relatively small.

The prediction formula producer **16** is configured to determine a prediction formula according to a combination of respective states of two or more kinds of correction information. The number of people in the room is reflected only on the coefficient "β" in the prediction formula. Therefore, there is no need to produce different prediction formulae according to the number of people. Regarding the correction according to the number of people, the room temperature estimator 18 may be configured to add a product of the number of present people and the predetermined temperature value to a room temperature estimated by the prediction formula. In the above example, therefore, eight of prediction formulae are produced according to kinds of the correction information on the sun light, the air ventilation and the rain fall.

The prediction formula producer **16** is configured to correct the coefficients "α" and "β" of a prediction formula according to the states of the respective correction information, and thereby to produce a corrected prediction formula. For example, correction amounts of the coefficients "α" and "β" are associated with the states of the respective correction information and stored in the storage **13.** In a case where one kind of correction information is in a certain state (for example, in a case where the air ventilation is present), the prediction formula producer **16** retrieves correction amounts of the coefficients "α" and "β" corresponding to this certain state from the storage **13,** and applies the retrieved correction amounts to the coefficients "α" and "β" of the prediction formula and thereby to produce a corrected prediction formula.

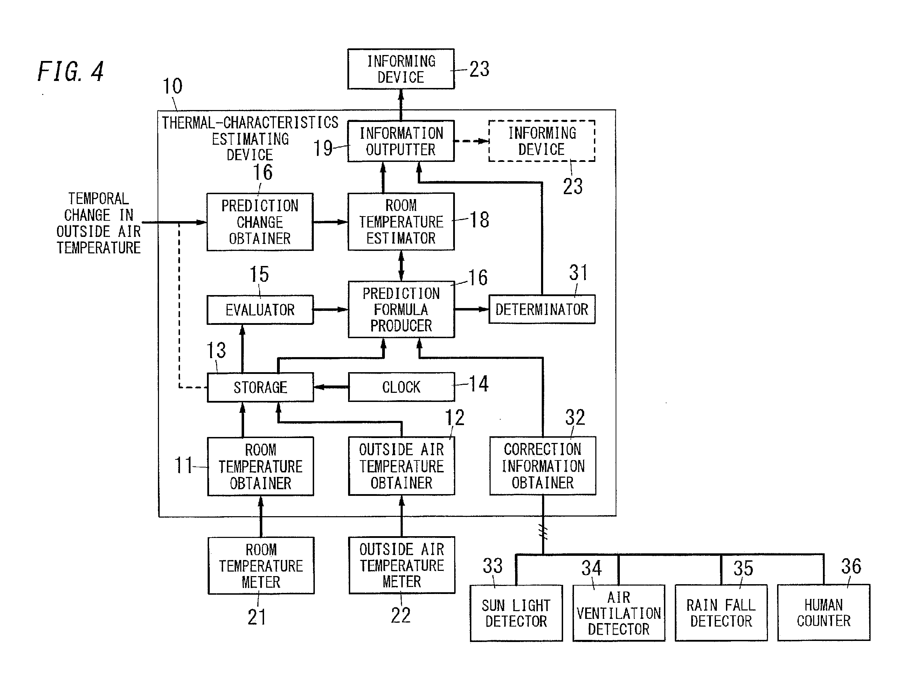

As shown in FIG. 4, the thermal-characteristics estimating device **10** of this modification includes a correction information obtainer **32** configured to obtain respective correction information from a sun light detector **33,** an air ventilation detector **34,** a rain fall detector 35 and a human counter 36.

The sun light detector 33 may include a photo detector such as a photo diode and a photo transistor, and a judging unit configured to compare an output of the photo detector with a threshold to determine the light amount. The influence of the sun light on the room depends on whether a curtain and/or a shutter is opened or closed. It is therefore desirable that the sun light detector 33 has a function configured to detect whether the curtain and/or the shutter is opened or closed.

The air ventilation detector **34** may be configured to detect whether a ventilation fan is operated or not, and/or to detect whether a window is opened or closed and/or to measure an airflow in the room. The rain fall detector **35** may be configured to collect rain water to measure the weight of the collected rain water per certain period, and/or to detect presence or absence of rain drops from an outside room image. The correction information on the rain fall may be obtained from information provided by a service provider through a telecommunication network such as internet. The human counter **36** may be configured to count the number of people in the room based on an in-room image.

The state of the correction information on the sun light, the air ventilation and the rain fall may be divided into three or more levels according to their degrees, instead of only two levels of "present" and "absent". The state of the sun light may be divided into four levels, e.g., "strong", "medium", "weak" and "very weak". Likewise, the state of air ventilation and/or the rain fall may be divided into three or more levels.

The room temperature estimator **18** corrects the prediction formula based on the correction information obtained by the correction information obtainer **32** to produce a corrected prediction formula, and estimates a room temperature, from an outside air temperature, based on the corrected prediction formula. Note that the correction amounts of the coefficients "α" and "β" according to each level of the sun light, the air ventilation, the rain fall and the number of people may be determined statistically based on actual measured values.

### (Embodiment 2)

In the modification of Embodiment 1, a prediction formula as a basis is corrected, in order to reflect the influence of the sun light on the room temperature. However, a same prediction formula is used for the day time (influence of the sun light would exist) and for the night time (influence of the sun light can be omitted). Contrary, in the present embodiment, in view of the fact that the influence of the sun light can be omitted in the night time, different kinds of prediction formulae are employed for a time period during which the room temperature would not be affected by the sun light (i.e., a time period of no sun light) and for a time period during which the room temperature would be affected by the sun light. That is, the prediction formula producer **16** of the thermal-characteristics estimating device 10 in the present embodiment has a function configured to produce two kinds of prediction formulae.

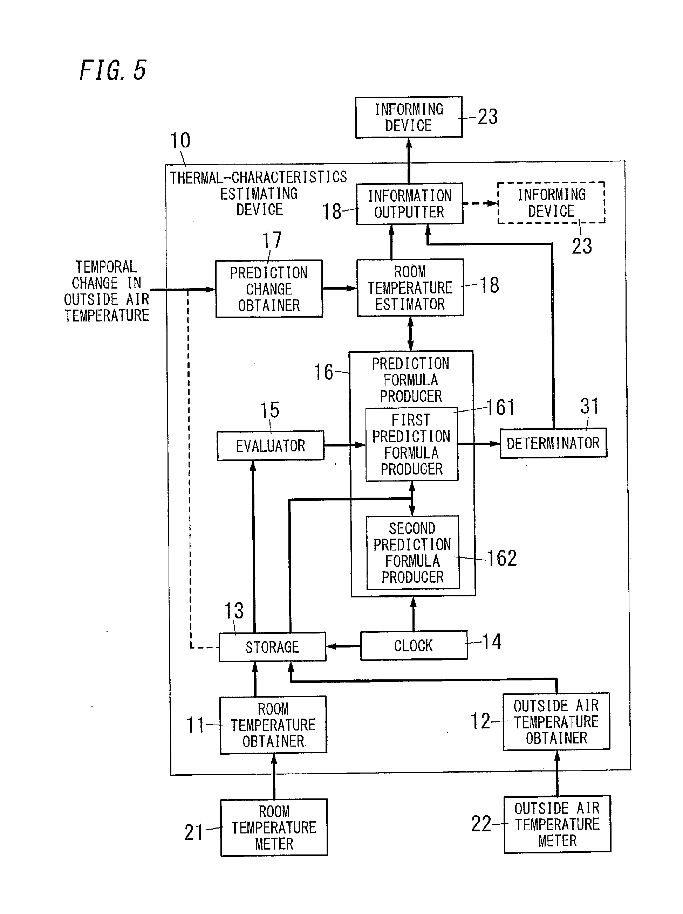

As shown in FIG. 5, the prediction formula producer **16** of the thermal-characteristics estimating device 10 in the present embodiment includes a first prediction formula producer **161** and a second prediction formula producer **162.** The first prediction formula producer **161** is configured to produce a prediction formula (first kind of prediction formula) based on the same technique as that in Embodiment 1. The second prediction formula producer **162** is configured, based on pieces of room temperature data and pieces of outside air temperature data corresponding to a specified time in each of two or more days, to produce a prediction formula (second kind of prediction formula) corresponding to the specified time.

The first prediction formula producer **161** is configured to produce the prediction formula as is the prediction formula producer **16** in Embodiment 1. According to the first prediction formula producer **161,** an evaluator **15** determines a time difference (optimum time difference) Δt_{A}, based on pieces of the room temperature data and pieces of the outside air temperature data, during a given extraction term, which are stored in the storage **13,** and then the first prediction formula producer **161** produces a prediction formula, based on the pieces of the room temperature data and the pieces of the outside air temperature, the one of which the time difference Δt_{A} is provided to. The first prediction formula producer 161 of the present embodiment may be configured to produce the prediction formula, based on pieces of room temperature data and pieces of outside air temperature data, only during a time period which the room temperature is affected by the sun light.

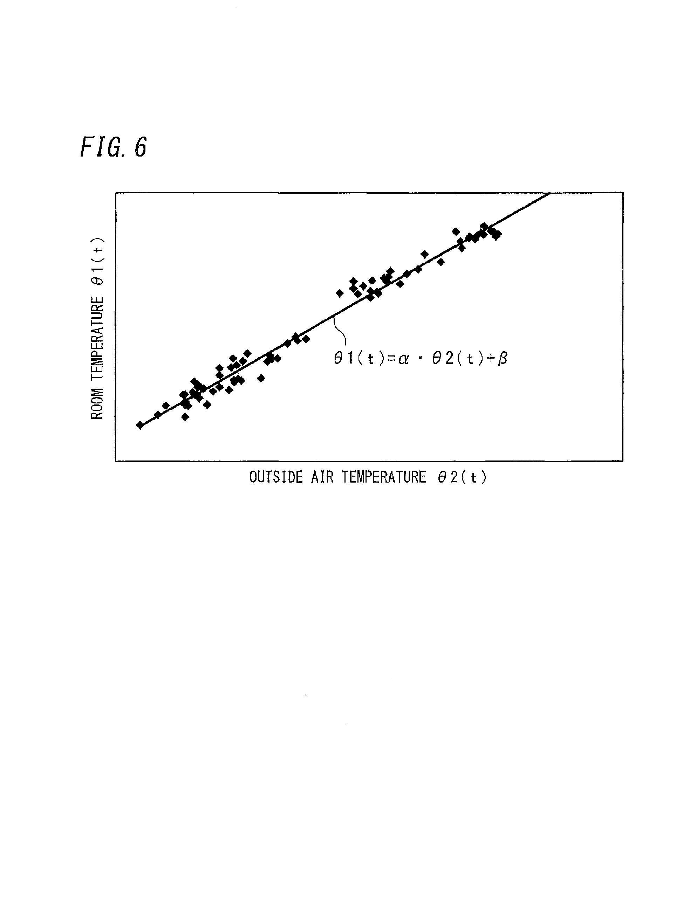

The second prediction formula producer **162** is configured to extract, from the storage **13,** pieces of the room temperature data and pieces of the outside air temperature data corresponding to a specified time in each of two or more days during a given extraction period, and to produce a regression prediction formula (single regression formula) from the pieces of the room temperature data and the pieces of the outside air temperature data corresponding to an identical time in each of the two or more days. As shown in FIG. 6, regarding collected data over two or more days of the pieces of room temperature data and the pieces of outside air temperature data each of which corresponds to a specified time in a time period during which the room temperature is not affected by the sun light, the room temperature and the outside air temperature show a linear relation. Specifically, the outside air temperature and the room temperature measured at a first specified time in each of two or more days show a linear relation, and also the outside air temperature and the room temperature measured at a second specified time in each of the two or more days show a linear relation. The second prediction formula producer **162** is configured to produce prediction formulae, based on this newly found knowledge. The extraction period may include some days which are comparable to the division period described in Embodiment 1.

Specifically, the second prediction formula producer **162** is configured to write a prediction formula by a formula of "θ1(t)=α*θ2(t)+β", based on the finding that there is a linear relation between pieces of the room temperature data θ1(t) and pieces of the outside air temperature data θ2(t) corresponding to a specified time "t" during the extraction period, as shown in FIG. 6. Note that, the second prediction formula producer **162** is configured to produce two or more prediction formulae that respectively correspond to two or more specified times. For producing the prediction formula, the pieces of the room temperature data θ1(t) and the pieces of the outside air temperature data θ2(t) are represented by a linear function, based on a known calculation method such as least-square method. Note that the coefficients "α", "β" of these formulae, in general, are different from the coefficients "α", "β" in the prediction formula produced by the first prediction formula producer **161.**

Based on the above, the second prediction formula producer **162** produce regression prediction formulae each of which matches a relation between pieces of the room temperature data and pieces of the outside air temperature data. In FIG. 6, data points in the left hand side show relations between the room temperature and the outside air temperature in the winter, and data points in the right hand side show relations between the room temperature and the outside air temperature in the summer. The regression prediction formula involves the outside air temperature at a specified time as the explanatory variable and the room temperature at the specified time as the dependent variable. In other words, the second prediction formula producer **162** is configured to produce the prediction formula by a simple linear regression analysis involving the outside air temperature data as the independent variable and the room temperature data as the dependent variable. The specified time for producing the regression prediction formula is selected from a time period during which the room temperature is not affected by the sun light and relies only on the outside air temperature, but the variation of the outside air temperature is relatively gentle.

The second prediction formula producer **162** is configured to employ the produced regression prediction formula as the prediction formula for determining the room temperature from the outside air temperature. The second prediction formula producer **162** is configured to produce two or more regression prediction formulae that respectively correspond to two or more specified times, and employs them as the respective prediction formulae for the two or more specified times.

As described above, the second prediction formula producer **162** produces the prediction formulae based on the pieces of room temperature data and the pieces of the outside air temperature data in a time period during which the room temperature is not affected by the sun light. Therefore, these prediction formulae are employed only for the time period during which the room temperature is not affected by the sun light. On the other hand, since the prediction formula produced by the first prediction formula producer **161** is produced based on the pieces of the room temperature data and the pieces of the outside air temperature data in a time period during which the room temperature is affected by the sun light, this prediction formula is employed for the time period during which the room temperature is affected by the sun light.

Therefore, the room temperature estimator **18** is configured to determine whether the current time is in the time period during which the room temperature is affected by the sun light or in the time period during which the room temperature is not affected by the sun light, based on the measured date and time of the clock **14.** The prediction formula (the second kind of prediction formula) produced by the second prediction formula producer **162** is used for the time period during which the room temperature is not affected by the sun light, and the prediction formula (the first kind of prediction formula) produced by the first prediction formula producer **161** is used for the time period during which the room temperature is affected by the sun light.

When the prediction formula produced by the first prediction formula producer **161** is employed, based on the temporal change in outside air temperature obtained by the prediction change obtainer **17,** an outside air temperature at a time which differs by the time difference Δt_{A} calculated by the evaluator **15** from a target time is applied to the prediction formula, as described in Embodiment 1. When the prediction formula produced by the second prediction formula producer **162** is employed, an outside air temperature at a target time is determined from the temporal change in outside air temperature obtained by the prediction change obtainer **17,** and the determined outside air temperature is applied to the prediction formula. The second prediction formula producer **162** produces prediction formulae for respective times of day, and thus one of prediction formulae corresponding to the target time is employed.

As described above, the room temperature estimator **18** in the present embodiment uses different kinds of prediction formulae according to whether the room temperature is affected by the sun light or not. Also, the outside air temperature to be applied to differs according to the kinds of the prediction formula. Accordingly, it would be possible to increase the prediction accuracy of the room temperature. Other structures and operations are similar to those in Embodiment 1.

## Claims

1. A room-thermal-characteristics estimating device comprising:
a room temperature obtainer configured to obtain room temperature data;
an outside air temperature obtainer configured to obtain outside air temperature data;
a storage configured to store the room temperature data obtained by the room temperature obtainer and the outside air temperature data obtained by the outside air temperature obtainer with each piece of the room temperature data and the outside air temperature data associated with a corresponding measured date and time;
an evaluator configured to determine a time difference, based on pieces of the room temperature data and pieces of the outside air temperature data, during a given extraction term, which are stored in the storage, by relatively shifting one of corresponding measured dates and times of the pieces of the room temperature data and corresponding measured dates and times of the pieces of the outside air temperature data so that a correlation coefficient between the pieces of the room temperature data and the pieces of the outside air temperature data becomes maximum;
a prediction formula producer configured
to provide the time difference determined by the evaluator to one of the pieces of the room temperature data and the pieces of the outside air temperature data, during the extraction term, which are stored in the storage, and
to produce a prediction formula expressing a relation between the pieces of the room temperature data and the pieces of the outside air temperature data, the one of which the time difference is provided to;,
a prediction change obtainer configured to obtain a predicted temporal change in outside air temperature; and
a room temperature estimator configured to estimate a room temperature at a target date and time by
determining, from the temporal change in outside air temperature obtained by the prediction change obtainer, an outside air temperature at a date and time that is earlier by the time difference than the target date and time, and
applying the determined outside air temperature to the prediction formula produced by the prediction formula producer.

2. The room-thermal-characteristics estimating device according to claim 1, wherein
the extraction term is included in any one of division periods which a period of one year is divided into,
the prediction formula producer is configured to produce respective prediction formulae corresponding to the division periods, and
the room temperature estimator is configured
to select, from the respective prediction formulae corresponding to the division periods, a prediction formula corresponding to a division period which the target date and time belongs to, and
to estimate the room temperature based on the selected prediction formula.

3. The room-thermal-characteristics estimating device according to claim 1 or 2, wherein the extraction term is one or more days.

4. The room-thermal-characteristics estimating device according to any one of claims 1 to 3, further comprising a correction information obtainer configured to obtain correction information corresponding to one state that has been selected from two or more states, the correction information being besides the outside air temperature and affects the room temperature, wherein
the prediction formula producer is configured to correct the prediction formula according to the state of the correction information obtained by the correction information obtainer, and thereby to produce a corrected prediction formula, and
the room temperature estimator is configured to estimate the room temperature based on the corrected prediction formula.

5. The room-thermal-characteristics estimating device according to any one of claims 1 to 4, wherein
the room temperature obtainer is configured to obtain the room temperature data from a room temperature meter that measures a temperature of a room,
the prediction formula producer is configured to update the prediction formula for each predetermined period, and
the room-thermal-characteristics estimating device further comprises a determinator configured to judge a deterioration degree of heat insulating property of the room of which temperature is measured by the room temperature meter, employing a coefficient contained in the updated prediction formula as an evaluation value.

6. A room-thermal-characteristics estimating device comprising:
a room temperature obtainer configured to obtain room temperature data;
an outside air temperature obtainer configured to obtain outside air temperature data;
a storage configured to store the room temperature data obtained by the room temperature obtainer and the outside air temperature data obtained by the outside air temperature obtainer with each piece of the room temperature data and the outside air temperature data associated with a corresponding measured date and time;
an evaluator configured to determine a time difference, based on pieces of the room temperature data and pieces of the outside air temperature data, during a given extraction term, which are stored in the storage, by relatively shifting one of corresponding measured dates and times of the pieces of the room temperature data and corresponding measured dates and times of the pieces of the outside air temperature data so that a correlation coefficient between the pieces of the room temperature data and the pieces of the outside air temperature data becomes maximum;
a first prediction formula producer configured
to provide the time difference determined by the evaluator to one of: dates and times corresponding to the pieces of the room temperature data and; dates and times corresponding to the pieces of the outside air temperature data, during the extraction term, which are stored in the storage, and
to produce a prediction formula expressing a relation between the pieces of the room temperature data and the pieces of the outside air temperature, the one of which the time difference is provided to;
a second prediction formula producer configured, based on pieces of the room temperature data and pieces of the outside air temperature data corresponding to each time in each of two or more days during a given extraction period, which are stored in the storage, to produce regression prediction formulae, as prediction formulae, each of which express a relation between pieces of room temperature data and pieces of outside air temperature data for each time;
a prediction change obtainer configured to obtain a predicted temporal change in outside air temperature; and
a room temperature estimator configured
to, during a time period that the room temperature is affected by sun light, estimate a room temperature of a target time by, determining, from the temporal change in outside air temperature obtained by the prediction change obtainer, an outside air temperature at a time that is earlier by the time difference than the target time, and applying the determined outside air temperature to the prediction formula produced by the first prediction formula producer, and
to, during a time period that the room temperature is not affected by sun light, estimate a room temperature by applying an outside air temperature at a target time, which is obtained based on the temporal change in outside air temperature obtained by the prediction change obtainer, to a prediction formula corresponding to the target time produced by the second prediction formula producer.

7. The room-thermal-characteristics estimating device according to any one of claims 1 to 6, further comprising an information outputter configured to transmit the room temperature estimated by the room temperature estimator to an informing device.

8. The room-thermal-characteristics estimating device according to any one of claims 1 to 7, wherein the outside air temperature obtainer is configured to obtain outside air temperature data provided through a telecommunication network.

9. A program configured to cause a computer to function as the room-thermal-characteristics estimating device according to any one of claims 1 to 8.
